# EUROPÄISCHE PATENTSCHRIFT

(11) **EP 2 283 910 B1**
(45) Veröffentlichungstag und Bekanntmachung des Hinweises auf die Patenterteilung: **05.06.2013**
(21) Anmeldenummer: 10168651.7
(22) Anmeldetag: 07.07.2010
(51) Int. Cl.: B01D 35/153

(54) **Flüssigkeitsfilter, insbesondere Ölfilter**
Fluid filter, in particular oil filter
Filtre à liquide, notamment filtre à huile

(30) Priorität: 09.07.2009 DE 102009032702
(43) Veröffentlichungstag der Anmeldung: 16.02.2011
(73) Patentinhaber: MANN + HUMMEL GMBH, 71638 Ludwigsburg (DE)
(72) Erfinder: Jainek, Herbert, 74074, Heilbronn (DE)

(56) Entgegenhaltungen:
- EP-A1- 1 031 367
- DE-A1- 19 848 978
- DE-U1-202007 017 614

## Beschreibung

### Technisches Gebiet

Die Erfindung betrifft einen Flüssigkeitsfilter, insbesondere einen Ölfiker.

### Stand der Technik

In Kraftfahrzeugen und Industriemotoren werden Flüssigkeitsfilter, insbesondere Ölfilter eingesetzt, bei denen der Filtereinsatz getrennt vom Filtergehäuse ausgebildet ist. Der Filter weist ein entlang einer Trennfläche teilbares Filtergehäuse auf, wobei zwei Gehäuseteile des Filtergehäuses entlang einer Trennfläche mittels einer Dichtung gegeneinander abgedichtet sind.
Aus der DE198 48 978 A1 ist ein Filterelement bekannt, welches mittels einer radial wirkenden Labyrinthdichtung an der Endscheibe gegen das Gehäuse abgedichtet ist und mit eben dieser Labyrinthdichtung zusätzlich eine Ablaufbohrung verschließt.
Die EP 1 031 367 A1 zeigt einen Flüssigkeitsfilter mit einem Filterelement mit zwei Endscheiben, die aus einem grundmaterial und einem angeschäumten Dichtmaterial bestehen.
Der DE 20 2007 017 614 U1 ist ein Ölfilter zu entnehmen, der eine doppelkonzentrische Dichtung am Filterelement zum Leerlaufkanal des Filtergehäuses aufweist.

### Offenbarung der Erfindung

Der Erfindung liegt die Aufgabe zugrunde, einen Flüssigkeitsfilter, insbesondere Ölfilter gegenüber dem Stand der Technik zu verbessern. Diese Aufgabe wird durch einen Filter mit den Merkmalen des Anspruchs 1 gelöst.

Der erfindungsgemäße Flüssigkeitsfilter weist ein Filtergehäuse mit einem Filterelement und einem innerhalb eines Filterelementes vorgesehenen Standrohr auf, sowie ein Dichtelement, das in einer ersten Funktion auf einfache Weise bei einem in das Gehäuse eingesetztem Filterelement eine Ablaufbohrung im Filtergehäuse dicht verschließt, durch die beim Entfernen des Filterelementes die im Gehäuse vorhandene Flüssigkeit aus dem Gehäuse abfließen kann. In einer zweiten Funktion dichtet das Dichtelement die Reinseite von der Rohseite zwischen Standrohr und Gehäuse. Das Standrohr ist mit dem Filterelement dichtend verbunden.

Der Flüssigkeitsfilter weist ein Filtergehäuse mit einem Rohflüssigkeitseinlass und einem Reinflüssigkeitsauslass auf, sowie ein im Filtergehäuse angeordnetes Filterelement zur Reinigung einer Flüssigkeit, beispielsweise gebildet aus einem zu einem Zylinder geformten zick-zack-förmig gefaltetem Filtermedium mit stirnseitig angeordneten Endscheiben, dem Fachmann als Rundelement bekannt. Innerhalb des Filterelementes ist ein Standrohr angeordnet.

Das Dichtelement zum Verschließen der Ablaufbohrung im Gehäuse ist im Verbindungsbereich zwischen Standrohr und Filterelement angeordnet, so dass beim Entfernen des Filterelementes beim Filterelementwechsel im Servicefall die Ablaufbohrung freigegeben wird und die Flüssigkeit aus dem Gehäuse ablaufen kann. Die Ablaufbohrung besteht aus einer oder einer Mehrzahl von Bohrungen in einem Abstand zur Mittelachse des Filterelementes.

Das Dichtelement dichtet im eingebauten Zustand des Filterelementes die Ablaufbohrung im Filtergehäuse und gleichzeitig dichtet es zwischen Rein- und Rohseite des Filterelementes gegen das Gehäuse.

In einer bevorzugten Ausführung ist das Dichtelement an der der Ablaufbohrung zugewandten Stirnseite des Standrohres angeordnet. Das Standrohr weist bevorzugt einen in radialer Richtung erweiterten Aufnahmebereich auf, der das Dichtelement auf der einen Seite und die Endscheibe des Filterelementes auf der axial gegenüberliegenden Seite aufnimmt.

Zwischen dem Standrohr und dem Filterelement wird in einer gemeinsamen Dichtstelle die Rohseite gegen die Reinseite entlang der umlaufenden Außenwand des Standrohres gegenüber der Innenseite des Filterelementes radial abgedichtet, um eine Leckage entlang des Kontaktbereiches zwischen Standrohr und Filterelement zu verhindern. Zum Ausgleich von Toleranzen ist das Filterelement über die Länge der gemeinsamen Dichtstelle axial entlang des Standrohres verschiebbar.

In einer alternativen Ausführungsform ist das Dichtelement an einer der Ablaufbohrung zugewandten Endscheibe des Filterelementes angeordnet. Das Dichtelement ist mit der Endscheibe verbunden und wird im Servicefall mit dem Filterelement gewechselt.

Das Dichtelement ist vorteilhaft als umlaufender, flacher Ring oder Scheibe ausgeführt, so dass unabhängig von der Winkellage des Filterelementes oder des Standrohres um die Längsachse eine Abdichtung der Ablaufbohrung gewährleistet ist. Beim Einsetzen des Filterelementes in den Flüssigkeitsfilter ist somit eine Winkelpositionierung des Dichtelementes nicht nötig und das Filterelement kann unabhängig von der Winkellage verbaut werden.

In der erfindungsgemäßen Ausführungsform ist das Dichtelement als ein vom Schlauch gestochener Elastomerring ausgebildet. Besonders geeignet als Werkstoff für das Dichtelement ist ACM.

Das innerhalb des Filterelementes vorgesehene Standrohr, durch welches die Reinflüssigkeit fließt ist in einer bevorzugten Ausführung mit einer Schmutzhaube versehen. Diese Schmutzhaube kann beispielsweise ein Gitter sein und verhindert bei einem fehlenden Filtereinsatz den Zufluss von verschmutzter Flüssigkeit in den Reinflüssigkeitsauslass.

In einer bevorzugten Ausführungsform wird das Standrohr als Teil des Filterelementes geliefert, ein- und ausgebaut. In dieser Ausführungsform ist die Dichtscheibe an dem Standrohr angeordnet und ist damit leicht anbringbar.

Das Standrohr kann in ein Filterelement eingeschoben werden oder bei der Fertigung eines Filterelementes mit dem Filterelement verbunden werden, sodass beim Austausch des Filterelementes das Standrohr ohne zusätzliche manuelle Tätigkeit ausgetauscht wird. Das Dichtelement am Standrohr wird so ebenfalls mit ausgetauscht.

Das Standrohr wird bevorzugt mit einer Kraft in Richtung der Mittellinie des Filterelementes zur Verpressung der Dichtung an das Gehäuse gedrückt zur besseren Abdichtung zwischen Reinbereich und Rohbereich im Kontaktbereich des Standrohres zum Gehäuse und zum sicheren Verschluss der Ablaufbohrung. Diese Kraft wird vorzugsweise durch eine Feder, insbesondere eine Spiralfeder aufgebracht, die sich am Deckel des Filtergehäuses abstützt.

In einer alternativen Ausgestaltungsform wird das Filterelement mit einer Kraft axial in Richtung der Ablaufbohrung gedrückt. Die Feder stützt sich an einem Deckel des Filtergehäuses ab. Durch diese Kraft folgt Verpressung der in die Endscheibe des Filterelementes aufgenommenen Dichtung und somit die Abdichtung zwischen Reinbereich und Rohbereich im Kontaktbereich des Standrohres zum Gehäuse. Zugleich wird die Ablaufbohrung im Gehäuse verdeckelt oder verschlossen.

### Kurze Beschreibung der Zeichnungen

Die Erfindung wird anhand von zwei Ausführungsbeispielen erläutert.

Die Figur 1 zeigt in einer Schnittdarstellung einen Filtereinsatz eines Ölfilters in einem vereinfacht dargestellten Gehäuse.

Die Figur 2 zeigt in einer Schnittdarstellung einen Filtereinsatz mit einer alternativen Ausgestaltung eines Standrohres.

### Ausführungsform(en) der Erfindung

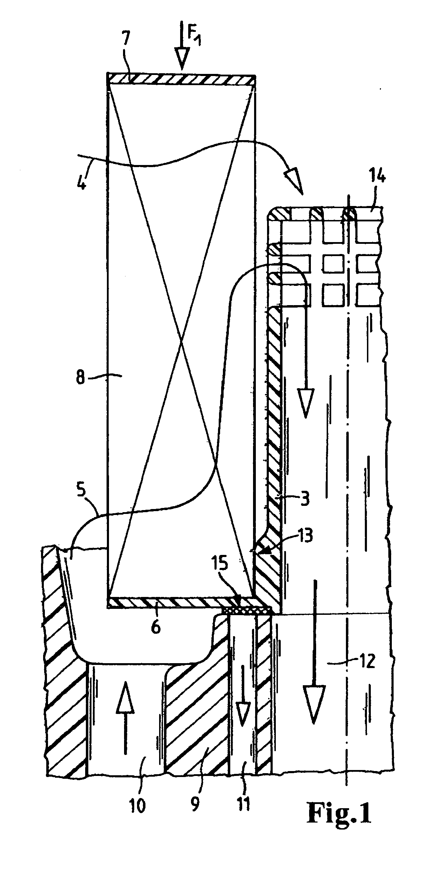

In Figur 1 ist ein Gehäuse 9 eines Ölfilters schematisch dargestellt, welches einen Rohöleinlass 10 und Reinölauslass 12 aufweist und mit einem nicht dargestellten Deckel verschlossen wird. Innerhalb des Gehäuses befindet sich ein zylinderförmiges Filterelement 8, das aus einem zick-zack-förmig gefalteten Filtermedium hergestellt ist und stirnseitig Endscheiben 6 und 7 aufweist. Durch das Filterelement strömt das Rohöl gemäß den Pfeilen 4 und 5, wird gereinigt und verlässt im Zentrum des Filterelementes 8 dasselbe über den Reinölablauf 12.

Am Gehäuse 9 ist ein weiterer Ablauf in Form einer Ablaufbohrung 11 vorgesehen, der bei beim Entfernen und einem Austausch des Filterelementes 8 dafür sorgt, dass noch vorhandenes Öl aus dem Gehäuse nach unten ablaufen kann.

Innerhalb des Filterelementes 8 ist ein Standrohr 3 vorgesehen durch welches das Reinöl fließt und welches mit einer Schmutzhaube 14 versehen ist. Diese Schmutzhaube kann beispielsweise auch ein Gitter sein und verhindert bei einem fehlenden Filtereinsatz den Zufluss von verschmutzem Öl in den Reinölablauf.

Das Filterelement 8 wird mittels einer hier nicht dargestellten Spiralfeder mit einer Kraft F₁ von oben belastet. Diese Spiralfeder stützt sich an dem Deckel des Gehäuses 9 ab. Durch diese Kraft folgt eine Dichtung zwischen Reinölbereich und Rohölbereich im Bereich der Dichtstelle 15, die Ablaufbohrung 11 wird verdeckelt oder verschlossen. Diese Dichtstelle kann mittels einer Elastomerscheibe verbessert werden. Sofern das Standrohr 3 als Teil des Filterelementes geliefert und ein- bzw. ausgebaut wird, ist die Dichtscheibe 15 an dem Standrohr 3 angeordnet und ist somit leicht anbringbar.

Zwischen Standrohr 3 und Filterelement 8 wird in einer Dichtstelle 13 die Rohseite gegen die Reinseite entlang der umlaufenden Außenwand des Standrohres 3 gegenüber der Innenseite des Filterelementes 8 radial abgedichtet. Das Filterelement 8 ist zum Ausgleich von Toleranzen axial entlang des Standrohres 3 verschiebbar. Diese Dichtstelle wird durch das Fügen des Standrohres in das Filterelement gebildet, beispielsweise durch eine Verformung von Standrohr und/oder Endscheibe des Filterelements im Bereich der Dichtstelle.

In dieser gezeigten Ausführungsform weist das Standrohr 3 einen erweiterten Durchmesser im Bereich der Endscheibe 6 des Filterelementes 8 auf, so dass die untere Endscheibe 6 des Filterelementes vom Stützrohr aufgenommen ist.

Alternativ kann das Standrohr 3 als ein Teil der unteren Endscheibe 6 ausgebildet sein, so dass die Dichtung 15 in die Endscheibe aufgenommen ist.

Wie bereits erwähnt besitzt das Standrohr 3 ein mit diesem verbundenen Schmutzgitter oder eine Schmutzhaube 14. Das hier gezeigte Standrohr kann in ein Filterelement eingeschoben werden oder bei der Fertigung eines Filterelementes mit dem Filterelement verbunden werden, sodass beim Austausch des Filterelementes das Standrohr 3 ohne zusätzliche manuelle Tätigkeit ausgetauscht wird.

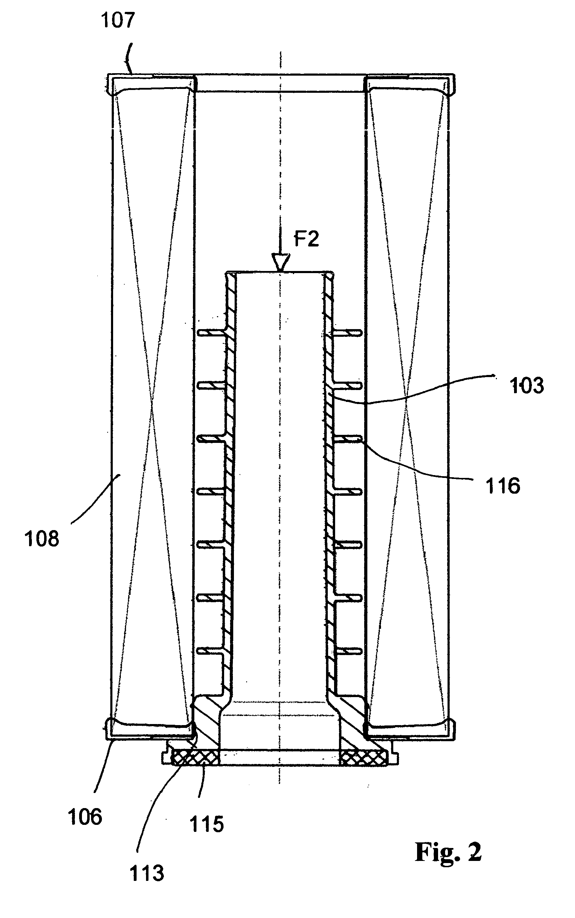

Die Figur 2 zeigt einen Schnitt durch ein Filterelement 108 mit den Endscheiben 106 und 107, das in ein in dieser Figur nicht dargestelltes Gehäuse 9 eingesetzt werden kann. Innerhalb des Filterelementes 108 ist ein Standrohr 103 angeordnet, durch welches das Reinöl fließt. Das Standrohr 103 weist radial nach außen gerichtete Abstandshalter 116 zur Führung und/oder Verstärkung des Filterelementes 108 in Form von Rippen auf, die zugleich das ablaufende Öl zwischen Filterelement 108 und Standrohr 103 nach unten leiten.

Das Standrohr 103 wird mittels einer hier nicht dargestellten Spiralfeder mit einer Kraft F₂ von oben belastet und gegen das Gehäuse 9 gedrückt. Diese Spiralfeder stützt sich an einem nicht gezeigten Deckel des Gehäuses 9 ab. Durch diese Kraft folgt eine Abdichtung zwischen Reinölbereich und Rohölbereich im Bereich eines Dichtelementes 115.

Durch die auf das Dichtelement 115 wirkende Kraft F₂ wird zugleich die Ablaufbohrung 11 im Gehäuse 9 verdeckelt oder verschlossen. Dieses Dichtelement kann eine Dichtung in Form eines flachen Elastomerrings ausgestaltet sein. Das Dichtelement 115 ist am Standrohr 103 angeordnet und ist somit leicht zusammen mit dem Standrohr 103 am Filter anbringbar.

Das gezeigte Standrohr 103 kann in ein Filterelement 108 eingeschoben werden oder bei der Fertigung eines Filterelementes 108 mit diesem verbunden werden, sodass beim Austausch des Filterelementes das Standrohr 3 ohne zusätzliche manuelle Tätigkeit ausgetauscht wird.

## Patentansprüche

1. Flüssigkeitsfilter, insbesondere Ölfilter, mit einem Filtergehäuse (9) und einem im Filtergehäuse (9) angeordneten Filterelement (8, 108), wobei innerhalb des Filterelementes (8, 108) ein Standrohr (3, 103) vorgesehen ist und dieses Standrohr (3, 103) mit dem Filterelement (8, 108) dichtend verbunden ist, wobei im Verbindungsbereich zwischen Standrohr und Filterelement ein Dichtelement (15, 115) vorgesehen ist zum Verschließen einer Ablaufbohrung (11) im Gehäuse (9), wobei das Dichtelement (15, 115) sowohl die Ablaufbohrung (11) dicht verschließt als auch zwischen Standrohr (3, 103) und Filtergehäuse (9) Rein- und Rohseite voneinander abdichtet, **dadurch gekennzeichnet, dass** das Dichtelement (15, 115) als ein vom Schlauch gestochenes Elastomerteil ausgebildet ist.

2. Flüssigkeitsfilter nach Anspruch 1, **dadurch gekennzeichnet, dass** das Dichtelement (15, 115) an der Endscheibe (6, 106) des Filterelementes (8, 108) angebracht ist.

3. Flüssigkeitsfilter nach Anspruch 1, **dadurch gekennzeichnet, dass** das Dichtelement (15, 115) am Standrohr (3, 103) angebracht ist.

4. Flüssigkeitsfilter nach Anspruch 2 oder 3, **dadurch gekennzeichnet, dass** das Dichtelement (15,115) im Servicefall mit dem Filterelement (8, 108) auswechselbar ist.

5. Flüssigkeitsfilter nach einem der vorherigen Ansprüche, **dadurch gekennzeichnet, dass** das Dichtelement (15, 115) als umlaufender Ring zur winkellageunabhängigen Positionierung beim Einbau des Filterelementes (8, 108) und/oder des Standrohres (3, 103) in das Gehäuse (9) ausgebildet ist.

6. Flüssigkeitsfilter nach einem der vorherigen Ansprüche, **dadurch gekennzeichnet, dass** das Dichtelement (15, 115) aus dem Elastomermaterial Acrylatkautschuk (ACM) besteht.

7. Flüssigkeitsfilter nach einem der vorherigen Ansprüche, **dadurch gekennzeichnet, dass** eine Abdichtung zwischen Standrohr (3, 103) und Filterelement (8, 108) an einer gemeinsamen Dichtstelle (13, 113) durch das Fügen des Standrohres (3, 103) in das Filterelement (8, 108) gebildet ist.

8. Flüssigkeitsfilter nach einem der vorherigen Ansprüche, **dadurch gekennzeichnet, dass** das filterelement (8, 108) aus einem zu einem Zylinder geformten zick-zackförmig gefaltetem Filtermedium mit stirnseitig angeordneten Endscheiben (6, 106, 7, 107) gebildet ist.

9. Flüssigkeitsfilter nach einem der vorherigen Ansprüche, **dadurch gekennzeichnet, dass** eine am Deckel des Filtergehäuses (9) abgestützte Felder, insbesondere eine Spiralfeder, das Standrohr (3, 103) mit einer Kraft (F₁, F₂) in Richtung der Mittellinie des Filterelementes (8, 108) an das Gehäuse (9) drückt.

## Claims

1. Liquid filter, in particular oil filter, with a filter housing (9) and a filter element (8, 108) disposed in the filter housing (9), a standpipe (3, 103) being provided in the filter element (8, 108) and this standpipe (3, 103) being sealingly connected with the filter element (8, 108), a sealing element (15, 115) being provided in the connecting area between standpipe and filter element for closing a drain hole (11) in the housing (9), the sealing element (15, 115) sealingly closing the drain hole (11) and sealing the raw and clean side from each other between the standpipe (3, 103) and the filter housing (9), **characterized in that** the sealing element (15, 115) is an elastomer part made from a hose.

2. Liquid filter according to claim 1, **characterized in that** the sealing element (15, 115) is attached to the end plate (6, 106) of the filter element (8, 108).

3. Liquid filter according to claim 1, **characterized in that** the sealing element (15, 115) is attached to the standpipe (3, 103).

4. Liquid filter according to claim 2 or 3, **characterized in that** the sealing element (15, 115) is replaceable with the filter element (8, 108) during service support.

5. Liquid filter according to one of the above claims, **characterized in that** the sealing element (15, 115) is designed as peripheral ring for an independent positioning of the angular position during installation of the filter element (8, 108) and/or the standpipe (3, 103) into the housing (9).

6. Liquid filter according to one of the above claims, **characterized in that** the sealing element (15, 115) consists of the elastomer material acrylate rubber (ACM).

7. Liquid filter according to one of the above claims, **characterized in that** a sealing is formed between standpipe (3, 103) and filter element (8, 108) at a common sealing area (13, 113) by fitting the standpipe (3, 103) into the filter element (8, 108).

8. Liquid filter according to one of the above claims, **characterized in that** the filter element (8, 108) is made of a zigzag-folded filter medium shaped as a cylinder with frontally disposed end plates (6, 106, 7, 107).

9. Liquid filter according to one of the above claims, **characterized in that** a spring, in particular a spiral spring, supported by the cover of the filter housing (9) presses the standpipe (3, 103) with a force (F₁, F₂) towards the centerline of the filter element (8, 108) against the housing (9).

## Revendications

1. Filtre à liquide, notamment filtre à huile, avec un boîtier de filtre (9) et un élément filtrant (8, 108) disposé dans le boîtier de filtre (9), un dauphin en fonte (3, 103) étant prévu au sein de l'élément filtrant (8, 108) et le dauphin en fonte (3, 103) étant relié de manière étanche à l'élément filtrant (8, 108), un élément d'étanchéité (15, 115) étant prévu dans la zone de jonction entre le dauphin en fonte et l'élément filtrant, cet élément d'étanchéité étant destiné à obturer un orifice d'écoulement (11) situé dans le boîtier (9), l'élément d'étanchéité (15, 115) obturant l'orifice d'écoulement (11) de manière étanche et étanchant un côté pur d'un côté brut entre le dauphin en fonte (3, 103) et le boîtier de filtre (9), **caractérisé en ce que** l'élément filtrant (15, 115) est exécuté comme une pièce en élastomère découpée dans un tuyau.

2. Filtre à liquide selon la revendication 1, **caractérisé en ce que** l'élément d'étanchéité (15, 115) est monté sur le disque d'extrémité (6, 106) de l'élément filtrant (8, 108).

3. Filtre à liquide selon la revendication 1, **caractérisé en ce que** l'élément d'étanchéité (15, 115) est monté sur le dauphin en fonte (3, 103).

4. Filtre à liquide selon la revendication 2 ou 3, **caractérisé en ce que** l'élément d'étanchéité (15, 115) peut être remplacé avec l'élément filtrant (8, 108) en cas d'intervention de service.

5. Filtre à liquide selon l'une des revendications précédentes, **caractérisé en ce que** l'élément d'étanchéité (15, 115) est exécuté en tant que bague circulaire en vue du positionnement indépendant de la position angulaire lors du montage de l'élément filtrant (8, 108) et/ou du dauphin en fonte (3, 103) dans le boîtier (9).

6. Filtre à liquide selon l'une des revendications précédentes, **caractérisé en ce que** l'élément d'étanchéité (15, 115) est constitué du matériau élastomère qu'est le caoutchouc acrylique.

7. Filtre à liquide selon l'une des revendications précédentes, **caractérisé en ce qu'**une étanchéité est formée, par assemblage du dauphin en fonte (3, 103), dans l'élément filtrant (8, 108) entre le dauphin en fonte (3, 103) et l'élément filtrant (8, 108), à un point d'étanchéité commun (13, 113).

8. Filtre à liquide selon l'une des revendications précédentes, **caractérisé en ce que** l'élément filtrant (8, 108) est constitué d'un milieu filtrant plié en accordéon en forme de cylindre, avec des disques d'extrémité (6, 106, 7, 107) frontaux.

9. Filtre à liquide selon l'une des revendications précédentes, **caractérisé en ce qu'**un ressort s'appuyant sur le couvercle du boîtier de filtre (9), notamment un ressort en spirale, pousse le dauphin en fonte (3, 103), avec une force (F₁, F₂), en direction de l'axe central de l'élément filtrant (8, 108), contre le boîtier (9).
